# EUROPEAN PATENT APPLICATION

(11) **EP 2 799 279 A1**
(43) Date of publication of application: **05.11.2014**
(21) Application number: 13166223.1
(22) Date of filing: 02.05.2013
(51) Int. Cl.: B60N 2/28, B60R 21/207, B60N 2/00

(54) **A safety system for a detachable seat of a vehicle**

(71) Applicant: Volvo Car Corporation, 40531 Göteborg (SE)
(72) Inventor: Hardå, Peter, 42349 Torslanda (SE); Heurlin, Fredrik, 42353 Torslanda (SE)
(74) Representative: Kraenzmer, Martin

(57) **Abstract**

The present disclosure relates to a safety system (5) for a detachable seat (3) of a vehicle (1) comprising
- an irreversible safety means (7), adapted to be comprised in the detachable seat (3),
- a receiver (9) for wireless communication, connectable to the irreversible safety means (7) and also adapted to be comprised in the detachable seat (3),

the receiver (9) being adapted to receive an activation signal for the irreversible safety means (7).

The disclosure further relates to a detachable seat of a vehicle, a kit, a vehicle and a method for activating an irreversible safety means.

## Description

### TECHNICAL FIELD

The present disclosure relates to a safety system for a detachable seat of a vehicle. The disclosure further relates to a detachable seat of a vehicle, a kit, a vehicle and a method for activating an irreversible safety means.

### BACKGROUND

It is well-known to use various safety means in order to protect the users of a vehicle in case of a collision involving the vehicle. The safety means may be comprised in the seat, e.g. a seat belt tensioner or a means for positioning the seat. The safety means may be divided into irreversible and reversible safety means. An irreversible safety means is once used not operable again. Instead it is restored or replaced after use. An example of an irreversible safety means is an airbag or a pyrotechnic means for tensioning the seat belt or positioning the seat. A reversible safety means may be reset to its initial state, when the situation of potential danger is over. An example of a reversible safety means is a seat belt tensioner driven by an electric motor.

It is further well-known to use detachable seats in a vehicle. One example is a detachable child seat. Such a child seat may be used for an infant or a small child. In many cases, the child seat may be taken out of the vehicle and the infant may be carried in the child seat outside of the vehicle.

There is a desire to provide a safety means, such as a seat belt tensioner, also for the detachable seat. The detachable seat may comprise a sensing system adapted to activate the safety means of the detachable seat in case of a collision. However, if using a sensor located in the detachable seat, the sensor is inherently some distance away from where the physical impact involving the vehicle occurs, resulting inter alia in a slower response.

### SUMMARY

The object of the present disclosure is to overcome or ameliorate at least one of the disadvantages of the prior art, or to provide a useful alternative.

It is desirable to provide a safety system for a detachable seat of a vehicle, which is able to react quickly.

It is further desirable that the safety system is adapted to work without direct electronic connection to an electronic system of the vehicle.

It also desirable to provide a safety system for a detachable seat of a vehicle, which system is suitable for an irreversible safety means.

The object above may be achieved by the subject-matter of claim 1.

Thus, in a first aspect of the present invention, there is provided a safety system for a detachable seat of a vehicle comprising
- an irreversible safety means, adapted to be comprised in the detachable seat,
- a receiver for wireless communication, connectable to the irreversible safety means and also adapted to be comprised in the detachable seat,
the receiver being adapted to receive an activation signal for the irreversible safety means.

Since the safety means is adapted to react to an external activation signal, it may be activated quicker after the physical impact involving the vehicle has occurred and/or in a more reliable way, as compared to relying on a sensor comprised in the detachable seat.

The activation signal may be sent by a collision detection system of the vehicle. The collision detection system of the vehicle may be arranged to determine an actual collision. Thereby, the irreversible safety means is not activated until it has been determined that a collision actually has occurred. It is thus avoided to activate the irreversible safety means unnecessarily, which could result in an unnecessary, and sometimes costly, replacement or restoring of the irreversible safety means, e.g. an airbag or a pyrotechnic means.

By communicating wirelessly between the receiver of the detachable seat and e.g. a collision detection system of the vehicle, it may be secured that the communication works, even if the detachable seat is not properly connected to the electronic system of the vehicle. This makes the detachable seat easier to install in the vehicle, since no direct electronic connection is necessary. By wireless communication, it may be secured that the communication between the collision detection system and the safety system of the detachable seat works as desired also in a critical moment, e.g. during a collision. Further, since using wireless communication, no physical contacts have to be connected, thereby avoiding the problem of wear of the physical contacts when detaching and attaching.

The irreversible safety means of the detachable seat may be a deployable airbag, a belt tensioner or a seat positioner for the detachable seat.

In a second aspect of the present invention, there is provided a detachable seat for a vehicle, the detachable seat comprising the safety system according to above.

The detachable seat may be a detachable child seat.

As an alternative, the detachable seat may be intended for an adult or for a larger child. Such detachable seats may be used in a vehicle, which is transferable from a state, wherein the vehicle is adapted to transport passengers, to a state wherein the vehicle is adapted to transport cargo.

In a third aspect of the present invention, there is provided a kit comprising
- the detachable seat comprising the safety system according to above, and
- a transmitter adapted for wireless communication with the receiver, the transmitter being adapted to be connected to a collision detection system of the vehicle.

The transmitter and the receiver are used for the above-mentioned wireless communication, in particular communication of the activation signal. There may also be communication sent in the other direction, from the receiver of the detachable seat, in that case being a transceiver, to the vehicle, e.g. information about if the detachable seat is in use or the weight of the user of the detachable seat. The information may be sent to the transmitter, in that case being a transceiver, or it may be sent to another receiver in the vehicle.

In a fourth aspect of the present invention, there is provided a vehicle comprising the kit according to above and a collision detection system.

The collision detection system of the vehicle according to the invention may be arranged to determine an actual collision. This differs from a collision detection system arranged to detect an imminent collision, which uses a prediction about if a collision is about to occur. There is then a risk that the prediction is wrong, and the irreversible safety means is activated, although no collision actually happened. Once activated the irreversible safety means has to be replaced or restored in order to be operable again, which will cause some cost and effort.

As an option, a collision detection system in the vehicle according to the invention may be adapted to detect both an imminent and an actual collision. For example, if the prediction has a high certainty, the irreversible safety means may be activated based on the predicted collision. On the other hand, if the prediction has a low certainty, the system may instead wait until an actual collision is detected.

The collision detection system of the vehicle may comprise at least one sensor for determining collision dynamics, i.e. a sudden change of motion. The sensor may e.g. determine linear acceleration and/or angular change and/or angular velocity. The collision dynamics are typically an order of magnitude greater than vehicle dynamics resulting from normal driving, acceleration or braking of the vehicle, e.g. at least 3 times greater, at least 5 times greater or at least 10 times greater. The sensor may be located between the driver seat and the front passenger seat, e.g. at the rear portion of the tunnel. One, two, three or more sensors may be provided.

The vehicle may further comprise a supplementary restraint system, wherein the collision detection system is adapted to activate the supplementary restraint system. The supplementary restraint system may comprise an irreversible safety means of the vehicle, e.g. an inflatable airbag located in a steering wheel of the vehicle or a dashboard, an inflatable side curtain or a pyrotechnic means used for seat belt tensioning.

The vehicle may further comprise an auxiliary output connection connected to the collision detection system of the vehicle, the transmitter being connectable to the collision detection system via the auxiliary output connection. The output connection is denoted "auxiliary" since it is in addition to any output connections used for the supplementary restraint system of the vehicle. The auxiliary output connection is used for activation of the safety means of the detachable seat.

The auxiliary output connection may have a standardized interface, such that equipment from different suppliers may be connected to each other. It is for example known to use a standardized interface to connect an actuator for the airbag in the steering wheel to an output connection of the collision detection system. Such a standardized interface may also be used to connect the transmitter to the collision detection system. The collision detection system may comprise one, two, three or more output connections with standardized interface. The transmitter may be connected via the auxiliary output connection having the standardized interface.

In a fifth aspect of the present invention, there is provided a method for activating an irreversible safety means of a detachable seat of a vehicle, the method comprising
- monitoring a collision detection system of the vehicle,
- wirelessly sending an activation signal to a receiver connected to the irreversible safety means of the detachable seat, when the collision detection system detects a collision involving the vehicle,
- activating the irreversible safety means of the detachable seat upon receipt of the activation signal.

The method may also be used for activating a reversible safety means.

The check if a collision has occurred may be made continuously or intermittently. Often the time between the checks is so short that the detection in practice is continuous.

By sending the activation signal wirelessly from the transmitter the above-mentioned advantages of wireless communication may be achieved.

The receiver may be located in a detachable child seat or a detachable seat for an adult.

The activation signal may be sent after a physical impact of the collision involving the vehicle has occurred. It is thus avoided to activate the irreversible safety means unnecessarily, which could result in an unnecessary, and sometimes costly, replacement or restoring of the irreversible safety means.

The method may further comprise
- connecting a transmitter to an auxiliary output connection of the collision detection system of the vehicle, such that the transmitter is adapted to send the activation signal, when the collision detection system detects a collision involving the vehicle.

The transmitter may be installed once, e.g. when manufacturing the vehicle or when using the detachable seat for the first time. Alternatively, the transmitter may be installed every time the detachable seat is to be used.

The method may further comprise
- determining if there is a person in the detachable seat.

In case the detachable seat is a child seat, the person is an infant or a child.

This determining step may be performed at any time during performing the method. The determining of a presence of a person may e.g. be performed using a radar, laser or ultrasound sensor for checking breathing and/or heart beating, by a visual system combined with image analysis, by checking weight on the seat, by checking if the seat belt is buckled up and/or by a capacitive sensor.

The step may be e.g. be performed before connection of the transmitter, since there may be no desire to connect the transmitter, if nobody is using the vehicle seat comprising the safety means.

Similarly, if the transmitter is already connected, the determining step may be performed before monitoring, since there may be no desire to monitor the collision detection system, if nobody is using the detachable vehicle seat comprising the safety means.

The determining step may, as a further option, be performed before sending the activation signal or before activating the safety means.

The information about if there is a person in the detachable seat may be sent from the receiver of the detachable seat, in that case being a transceiver, to the vehicle. The information may be sent to the transmitter, in that case being a transceiver, or it may be sent to another receiver in the vehicle, which is connected to the data network of the vehicle.

The object of the determining if a person is present in the detachable seat is to avoid unnecessary activation of the safety means. In case it is determined that there is no person in the seat, there is no desire to activate the safety means. This is especially advantageous, in case the safety means is irreversible, since an unnecessary, and sometimes costly, replacement or restoring of the irreversible safety means, e.g. an airbag or a pyrotechnic means, may be avoided.

### BRIEF DESCRIPTION OF THE DRAWINGS

The present invention will hereinafter be further explained by means of non-limiting examples with reference to the appended drawings wherein:
Fig. 1 is a schematic view of a vehicle according to the invention,
Fig. 2 is a schematic view of a detachable child seat according to the invention, and
Fig. 3 is a flow-chart of a method according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

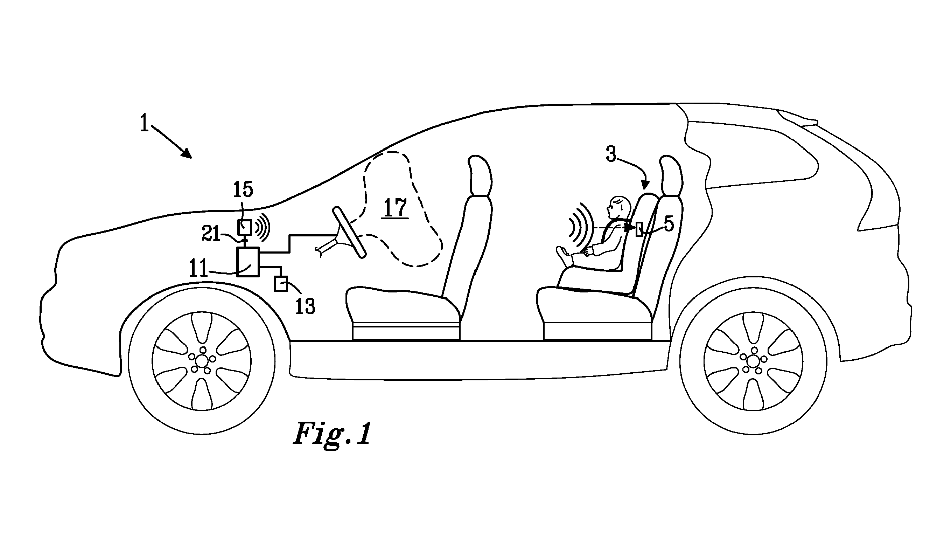

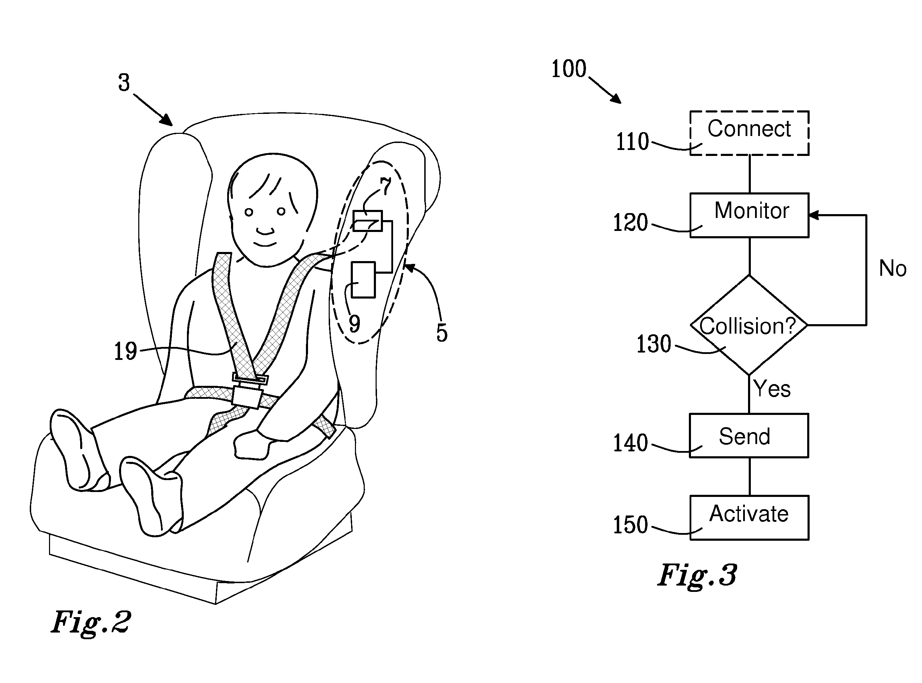

Figure 1 schematically illustrates a vehicle 1 according to the invention. The vehicle comprises a detachable seat in the form of a child seat 3, see the detailed view in Figure 2. The child seat 3 comprises a safety system 5 comprising an irreversible safety means, e.g. a seat-belt pretensioner 7, and a receiver 9 for wireless communication, connected to the irreversible safety means 7. When the receiver 9 receives an activation signal for the irreversible safety means 7, it is adapted to activate the irreversible safety means 7.

The vehicle 1 comprises a collision detection system 11, which is arranged to detect actual collisions. The collision detection system 11 comprises at least one sensor 13 for determining collision dynamics, i.e. a sudden change of motion. The sensor 13 may e.g. determine linear acceleration and/or angular change and/or angular velocity. The collision dynamics are typically an order of magnitude greater than vehicle dynamics resulting from normal driving, acceleration or braking of the vehicle, e.g. at least 3 times greater, at least 5 times greater or at least 10 times greater. The sensor 13 may be located between the driver seat and the front passenger seat, e.g. at the rear portion of the tunnel. One, two, three or more sensors 13 may be provided.

The vehicle 1 further comprises a transmitter 15, which is connected to the collision detection system 11. When the collision detection system 11 determines, based on the data from the sensor 13, that a collision has occurred, an activation signal is sent to an irreversible safety means of the vehicle 1 by the collision detection system 11, e.g. to an inflatable airbag 17 located in the steering wheel or the dashboard. One, two, three or more irreversible safety means may be provided in the vehicle 1. An activation signal is also sent to the transmitter 15, which in turn wirelessly transmits the activation signal to the receiver 9, such that the irreversible safety means of the detachable seat, i.e. the child seat 3, is activated, e.g. the seat-belt pretensioner 7 tensioning a seat belt arrangement 19 of the detachable seat.

The collision detection system 11 of the vehicle 1 is arranged to determine actual collisions. Thereby, the irreversible safety means, e.g. the airbag 17 or the seat-belt pretensioner 7, is not activated until it has been determined that a collision actually has occurred. It is thus avoided to activate the irreversible safety means unnecessarily, which could result in an unnecessary, and sometimes costly, replacement or restoring of the irreversible safety means, e.g. an airbag or a pyrotechnic means.

The irreversible safety means is capable of deploying in a very short time period, such that the irreversible safety means will be activated and deployed in the short time period elapsing between physical impact with the vehicle and the user of the seat moving any significant distance away from the seat.

Even if the detachable seat 3 may also comprise its own collision detection sensor, it may in many cases be advantageous to use the sensor/sensors 13 of the collision detection system 11 of the vehicle 1, since the collision detection system 11 of the vehicle 1 may be more reliable, versatile, and/or have a quicker response. The sensor/sensors 13 of the collision detection system 11 is/are further probably located closer to and/or with a stiffer connection to the point of impact than a sensor located in the detachable seat 3.

By communicating wirelessly between the receiver 9 of the detachable seat 3 and the collision detection system 11 of the vehicle 1, it is secured that the communication works, even if the detachable seat 3 is not properly connected to the electronics of the vehicle 1. This makes the detachable seat 3 easier to install in the vehicle 1, since no electronic connection is necessary.

The connection for an actuator of the airbag 17 located in the steering wheel is in modern vehicles standardized, having a standardized interface, such that equipment from different suppliers may be connected to each other. Such a standardized interface between the collision detection system and the actuator of the airbag may also be used to connect the transmitter 15 to the collision detection system 11. In that case, the transmitter may be connected via an auxiliary output connection 21 of the collision detection system 11 having the standardized interface.

Figure 3 schematically illustrates a method 100 for activating a safety means 7 of a detachable seat 3 of a vehicle 1. The safety means may be an irreversible safety means, exemplified by the seat-belt pretensioner 7 above. Other irreversible safety means, such as a child seat airbag located in a waist support of the child seat 3 or a pyrotechnic means for changing the position of the child seat 5 are also feasible.

The method comprises
Step 120: monitoring a collision detection system 11 of a vehicle 1,
Step 130: detecting if a collision has occurred,
Step 140: wirelessly sending an activation signal to a receiver 9 connected to the safety means 7, if the collision detection system 11 of the vehicle 1 detects a collision involving the vehicle 1,
Step 150: activating the safety means 7 of the detachable seat 3 upon receipt of said activation signal.

If no collision is detected in Step 130, the method returns to step 120. The check if a collision has occurred may be made continuously or intermittently. Often the time between the checks is so short that the detection in practice is continuous.

By sending the activation signal wirelessly from the transmitter 15 the above-mentioned advantages may be achieved.

The receiver 9 may be located in a detachable child seat 3 or a detachable seat for an adult. Such detachable seats may be used in a vehicle, which is transferable from a state, wherein the vehicle is adapted to transport passengers, to a state wherein the vehicle is adapted to transport cargo.

The method may comprise an optional step 110, which may be performed before step 120:
Step 110: connecting a transmitter 15 to an auxiliary output connection 21 of the collision detection system 11 of the vehicle 1, such that the transmitter 15 is adapted to send the activation signal, when the collision detection system 11 detects a collision involving the vehicle 1.

The transmitter 15 may be installed once, e.g. when manufacturing the vehicle or when using the detachable seat for the first time. Alternatively, the transmitter may be installed every time the detachable seat is to be used.

The method may further comprise the step of: determining if there is a person in the detachable seat. This determining step may be performed at any time during performing the method. The determining of a presence of a person may e.g. be performed using a radar, laser or ultrasound sensor for checking breathing and/or heart beating, by a visual system combined with image analysis, by checking weight on the seat, by checking if the seat belt is buckled up and/or by a capacitive sensor.

The step may be e.g. be performed before step 110, since there may be no desire to connect the transmitter, if nobody is using the vehicle seat comprising the safety means. Similarly, if the transmitter 15 is already connected, the determining step may be performed before step 120, since there may be no desire to monitor the collision detection system, if nobody is using the detachable vehicle seat comprising the safety means.

The determining step may as further options be performed sending the activation signal in step 140 or before activating the safety means 7 in step 150.

The object of the determining step is to avoid unnecessary activation of the safety means. In case it is determined that there is no person in the seat, there is no desire to activate the safety means. This is especially advantageous, in case the safety means is irreversible, since an unnecessary, and sometimes costly, replacement or restoring of the irreversible safety means, e.g. an airbag or a pyrotechnic means, may be avoided.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A safety system (5) for a detachable seat (3) of a vehicle (1) comprising
- an irreversible safety means (7), adapted to be comprised in said detachable seat (3),
- a receiver (9) for wireless communication, connectable to said irreversible safety means (7) and also adapted to be comprised in said detachable seat (3),
said receiver (9) being adapted to receive an activation signal for said irreversible safety means (7).

2. The safety system (5) according to claim 1, wherein said irreversible safety means is a deployable airbag, a belt tensioner (7) or a seat positioner for said detachable seat (3).

3. A detachable seat (3) for a vehicle (1), said detachable seat (3) comprising said safety system (5) according to claim 1 or 2.

4. The detachable seat (3) according to claim 3 being a detachable child seat (3).

5. A kit comprising
- said detachable seat (3) of claim 3 or 4, and
- a transmitter (15) adapted for wireless communication with said receiver (9), said transmitter (15) being adapted to be connected to a collision detection system (11) of said vehicle (1).

6. A vehicle (1) comprising said kit according to claim 5 and a collision detection system (11).

7. The vehicle (1) according to claim 6, wherein said collision detection system (11) of said vehicle (1) comprises at least one sensor (13) for determining collision dynamics.

8. The vehicle (1) according to claim 6 or 7 further comprising a supplementary restraint system, wherein said collision detection system (11) is adapted to activate said supplementary restraint system.

9. The vehicle (1) according to claim 8, wherein said supplementary restraint system comprises an irreversible safety means (7), e.g. an inflatable airbag (17) located in a steering wheel of said vehicle (1).

10. The vehicle (1) according to any one of claims 6-9 further comprising an auxiliary output connection (21) connected to said collision detection system (11) of said vehicle (1), said transmitter (15) being connectable to said collision detection system (11) via said auxiliary output connection (21).

11. The vehicle (1) according to claim 10, wherein said auxiliary output connection (21) has a standardized interface.

12. A method for activating an irreversible safety means (7) of a detachable seat (3) of a vehicle (1), said method comprising
- monitoring a collision detection system (11) of said vehicle (1),
- wirelessly sending an activation signal to a receiver (9) connected to said irreversible safety means (7) of said detachable seat (3), when said collision detection system (11) detects a collision involving said vehicle (1),
- activating said irreversible safety means (7) of said detachable seat (3) upon receipt of said activation signal.

13. The method according to claim 12, wherein the activation signal is sent after a physical impact of the collision involving said vehicle (1) has occurred.

14. The method according to claim 12 or 13 further comprising
- connecting a transmitter (15) to an auxiliary output connection (21) of said collision detection system (11) of said vehicle (1), such that said transmitter (15) is adapted to send said activation signal, when said collision detection system (11) detects a collision involving said vehicle (1).

15. The method according to any one of claims 12-14 further comprising
- determining if there is a person in said detachable seat (3).
